Europäisches Patentamt

European Patent Office

Office européen des brevets

(11) Publication number: **0 303 580**
**A1**

## (12) EUROPEAN PATENT APPLICATION

(21) Application number: **88830342.7**

(51) Int. Cl.⁴: **F 16 D 11/12**

(22) Date of filing: **12.08.88**

(30) Priority: **13.08.87 IT 945987**

(43) Date of publication of application:
**15.02.89 Bulletin 89/07**

(84) Designated Contracting States: **AT DE ES FR GB**

(71) Applicant: **Bondioli, Edi**
**Via Gina Bianchi 18**
**46029 Suzzara Mantova (IT)**

(72) Inventor: **Bondioli, Edi**
**Via Gina Bianchi 18**
**46029 Suzzara Mantova (IT)**

(74) Representative: **Mannucci, Gianfranco, Dott.-Ing.**
**Ufficio Tecnico Ing. A. Mannucci Via della Scala 4**
**I-50123 Firenze (IT)**

(54) **Disengagement device with axial control inside a drive shaft.**

(57) A plurality of pawls (26) radially movable within seats (16) formed in the shaft (1) are housed in a housing (20) of the drive member (10) having a peripheral surface and seats shaped for cooperating with the outer ends (26A) of said pawls; in an axial cavity (14) of said shaft there is an axially movable shaped operating core (30), which has shapings and inclined surfaces (40) apt to cooperate, together with counteracting elastic means (36), with the inner shaped ends of the pawls, in order to obtain the engagement and disengagement between the shaft and the drive member.

Fig.1

EP 0 303 580 A1

Description

## DISENGAGEMENT DEVICE WITH AXIAL CONTROL INSIDE A DRIVE SHAFT

<u>DESCRIPTION</u>

The invention refers to an engagement and disengagement device for mechanical drive members, which is designed so as to obtain reduced overall dimensions. easy manoeuvring and other advantages which will be apparent from the following description.

Substantially, the engagement and disengagement device between a shaft and at least a drive member on the shaft, comprises according to the invention:
- a set of pawls radially movable within seats formed in the shaft and on a possible element solid thereto to ensure the guiding of the pawls;
- in said drive member a housing with a peripheral surface with seats shaped for cooperating with the outer ends of said pawls;
- inside the shaft an axial cavity for receiving a shaped core axially movable for the operation, with elastic means reacting to the axial movement of said core;
- on said core, shapings and inclined surfaces able to cooperate with the inner shaped ends of the pawls;
- on the pawls, the outer ends shaped with inclination corresponding to seats in the housing and the inner ends developed with two differently inclined surfaces;
- on the central core, inclined surfaces in correspondence of the pawl surfaces having less inclination with respect to the shaft axis, as well as far more inclined surfaces in correspondence of the more inclined pawl surfaces. along an annular groove of said core on the side of the smallest cross-section of the zone of the surfaces having less inclination;
- and, for the manoeuvring of the core, spring means acting axially on core and reacting on the shaft, and an axial control rod acting on the core against the action of the spring means.

Said minor inclination has nearly the value of the angle of friction occurring between the cooperating lubricated surfaces (26B; 40; 174) of the core and of each pawl in order to obtain a manoeuvring which is independent from the transmitted torque.

The spring means may act on the core to cause the centrifugal sliding of the pawls with interaction between surfaces of greater inclination and thereby to determine the engagement and the retention of the engaged condition, while the control rod is so developed as to make the core slide against the action of the spring means and to cause the disengagement through a displacement of the pawl along the less inclined surfaces and thus in centripetal direction inside said groove, owing to the reaction of the transmitted torque. Alternatively, the spring means may act on the core to urge it into disengagement through a displacement until said annular groove (40) of the core is brought in correspondence of the pawls, while in this case said rod is axially operated through rolling bearing means for determining - against the action of spring means - the engagement with radial centrifugal displacement of the pawls.

The housing forming the seats for the pawls in the drive member may be formed by the hole in the hub of said drive member such as a spur gear.

The housing with seats (24) for cooperating with pawls may be formed in the body of said gear and more particularly in the larger part of said body if said gear is a bevel one.

In order to ensure: the lubrication within an oil bath mechanical box, there may be provided passages between the gear teeth and as far as the axial cavity of the shaft, with a manifold provided in the cooperating surfaces of said member and said shaft.

The invention will be better understood by following the description and the attached drawing, which shows a practical, non limitative exemplification of the same invention. In the drawing:

    Fig.1 shows a sectional view of a disengaging device included therein in the engaged condition;

    Fig.2 is a section on line II-II of Fig.1;

    Figs.3 and 4 show separately two members of the device, and in particular, a core and the gear wherein the device is partially housed;

    Figs.5 and 6 show separately and in two views a pawl used in the device in question;

    Figs.7 and 8 are similar to Figs.1 and 2, but show the device in the disengaged arrangement;

    Figs.9, 10, 11 and 12 show a modified embodiment in a longitudinal section and in a cross-section on line X-X of Figs.9, and in the engaged and disengaged arrangement, respectively;

    Fig.13 shows a further embodiment of a disengagement device.

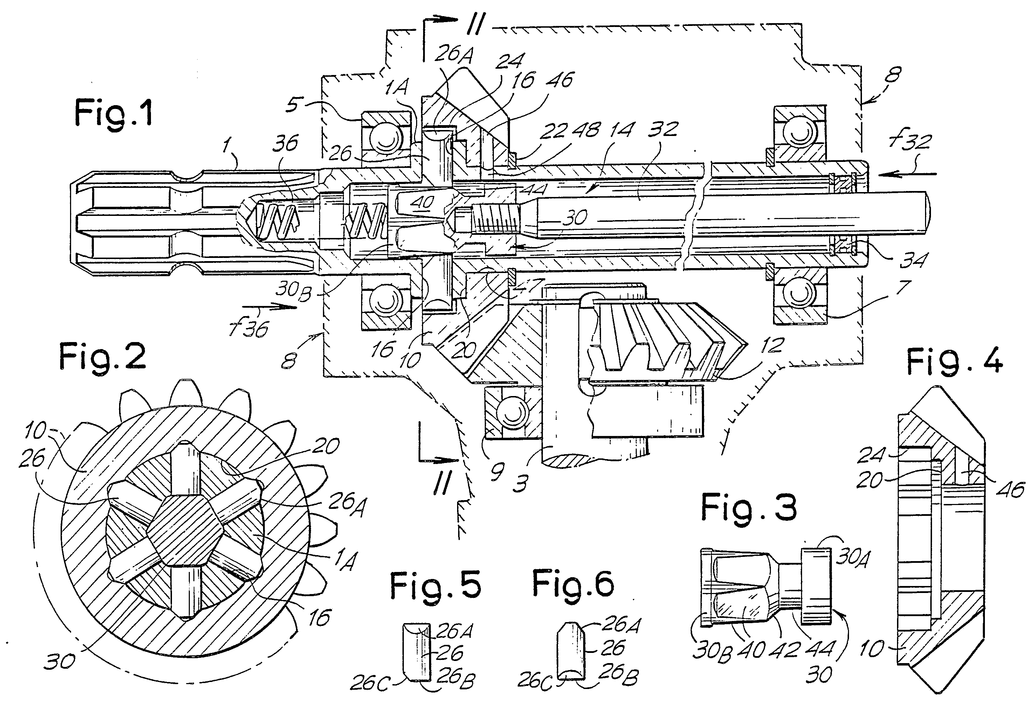

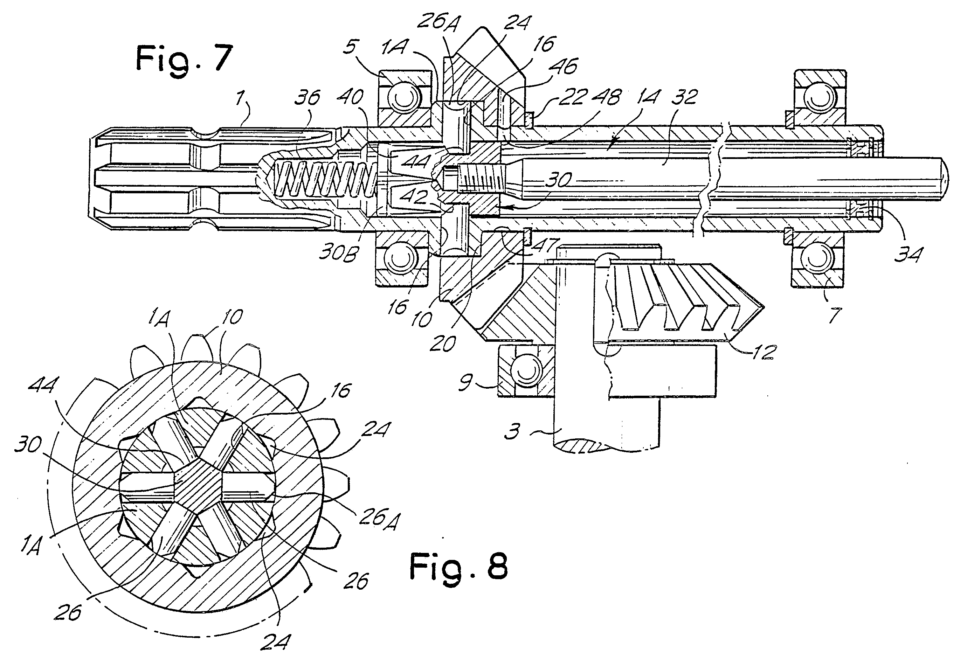

According to what is illustrated in Figs.1 to 8, numeral 1 indicates one of the shafts of the drive and numeral 3 indicates the other shaft orthogonal to the previous one. Numerals 5 and 7 indicate the bearings which support the shaft 1 within a drive box 8. Numeral 9 indicates one of the bearings which supports the shaft 3. Numerals 10 and 12 indicate the two bevel gears that are mounted on shaft 1 and on shaft 3, respectively, for the transmission between said two shafts. Gear 12 is keyed on shaft 3, while gear 10 is coupled to shaft 1 through the illustrated disengaging device. Shaft 1 has a deep axial cavity 14 which is tapered towards the left end (looking at the drawing), and from which a plurality of radial seats 16, formed within an annular expansion 1A of shaft 1, branch off. This annular expansion IA results at least partially received into a housing 20 formed in the wider part of the core of gear 10, that is, in correspondence of the major base of said frustoconical core of the gear. Said gear results engaged between the expansion 1A and a retaining ring 22 with a limited play possibility for a relative rotation with respect to the shaft. Expansion 1A results in abutment against bearing 5. Housing 20 exhibits an at right angles profile in its diametral cross section and has a substantially cylindrical perimetral wall, wherein a plurality if seats 24 with at least an inclined profile are formed. In the drawing, seats 24 are shown which are substantially symmetrical with respect to the corresponding pitch diameter. The number of seats 24 corresponds at least to the number of radial seats 16 within the annular expansion 1A of shaft 1, all seats being symmetrically distributed. Within seats 16, radially sliding pawls 26 .are housed, which are shaped at their outer end 26A with a shaping corresponding to that of seats 24 with which they must cooperate. The pawls inner ends are shaped with two inclined planes 26B and 26C, plane 26B being less inclined than plane 26C with respect to the shaft axis.

Inside the axial cxavity 14 of shaft 1, a core 30 is movable with which an axial control rod 32 is solid that projects beyond the end of shaft 1 by going through a seal disc 34 preventing leak of lubricant. The seal disc 34 is held by elastic retaining rings. Core 30 is urged by a helical spring 36, reacting on the bottom of cavity 14 of shaft 1, in the direction of arrow f36, that is, in such a direction as to cause the control rod 32 to come out from disc 34. Core 30 has overall cylindrical dimensions delimited by the two cylindrical end zones 30A and 30B, which allow a correct sliding of the core inside the axial cavity 14, that is also cylindrical at least in the zone where said core must slide. In the vicinity of the cylindrical zone 30B the core further exhibits a portion with a conical shaping or with flats 40 inclined with respect to the core axis to an extent corresponding to that of the pawls surfaces 26B having less inclination. This portion is followed by a zone 42 which may be frustoconical or have flats lined up with those indicated by 40 but having greater inclination with respect to the core axis, corresponding to the inclination of surfaces 26C of pawls 26. Between the zone 30A and the portion 42, an annular groove 44 is thereby created having such a width as to be able to house the inner ends of the pawls. Advantageously, the lower inclination of surfaces 26B and surfaces 40 may correspond to the inclination of the cone or angle of friction between surfaces 28B and 40 in the lubrication conditions provided inside cavity 14 for the purposes to be indicated. The lubrication inside cavity 14 and thus inside the disengaging device is ensured through the motion of gear 10, by the presence of radial holes 46 in correspondence of the slot between adjacent teeth of gear 10, through an annular manifold 47 and corresponding holes 48 suitably distributed in the thickness of shaft 1 between the outside and cavity 14, over the core sliding zone. Through the rotation of gears 10 and 12 meshing with each other in an oil bath inside the box where the bearings 5, 7 and 9 are mounted, it is possible to make the lubricant enter inside cavity 14 to lubricate all the cooperating surfaces of core 30 and of pawls 26.

According to a possible modified embodiment, the core 30 may exhibit, in place of surfaces 40, a frustoconical or a cylindrical surface. or even a prismatic configuration.

The operation of the disengaging device according to the above description is as follows. Under the transmission conditions, the thrust exerted by spring 36 causes a displacement of core 30 to a position in which pawls 26 interact with the corresponding surfaces 40. Pawls 26 protrude from the expansion 1A of shaft 1 and penetrate, with their shaped ends 26A, into seats 24 formed by the cavity 20 of the body of gear 10. The transmission of motion takes place through the reaction between the walls of seats 24 and the shaped ends 26A of pawls 26. During the motion transmission pawls 26 are pressed in the centripetal direction against the surfaces 40 of core 30 according to an extent depending of the transmitted torque. When the inclination angle of surfaces 40 and of surfaces 26B has a value which is nearly that of the angle of friction occurring under the working conditions of such surfaces, as far as the sliding possibility of core 30 is concerned, the operation results, considerably independent of the transmitted torque, inasmuch as independent of the pressures exerted by the pawls 26 upon surfaces 40. Under normal drive condition, the thrust of spring 36 is sufficient to keep the core in the position wherein the surfaces 40 thereof cooperate with the surfaces 26B of pawls 26. The rod 32 projects from disc 34 and from the shaft, as well as from the box in which shaft 1 is mounted. When it is desired to disengage the device in order to break off the transmission between the two gears 10 and 12, it is sufficient to push rod 32 in the direction of arrow f32 so that (without a differentiated effort being required in compliance with the transmitted torque) core 30 may be moved thereby causing the pawls to move inside the annular groove 44 and come into contact with the pawls surfaces 26C having greater inclination and with the surface 42 of groove 44. Under these conditions, the outer end 26A of pawls 26 goes back into the relevant seat 16, and gear 10 becomes disengaged from the coupling with the shaft 1 thereby taking up a disengagement condition. With the stopping of the thrust according to arrow f32 on rod 32, spring 36 urges the pawls through the surfaces 42 and 26C to expand in centrifugal direction so that same pawls penetrate again into the seats 24 with a limited relative angular movement between gear 10 and shaft 1, especially at the moment in which the displacement is made to begin and, however, when the seats 24 are in front of the pawls.

The configuration of the inner ends of pawls and of core 30 allows to obtain a manoeuvre to be made through a very short run of the central core. The manoeuvre is interrupted by the penetration of pawls 26 into groove 44, owing to the presence of the stop provided by the central core on one side of said groove 44.

Spring 36, which acts axially on the core, gives stability to the device in its condition of motion transmission and counteracts (by a force predetermined through the calibration of spring 36) the disengagement manoeuvre by rendering such manoeuvre "sensitive" and allows as well the automatic reactivation of the engagement device as soon as the external thrust on control rod 32 has stopped.

The disengaging manoeuvre, obtained by the thrust according to arrow f32 on the control rod 32, must be broken off only after stopping or greatly slowing down the velocity of all the moving parts.

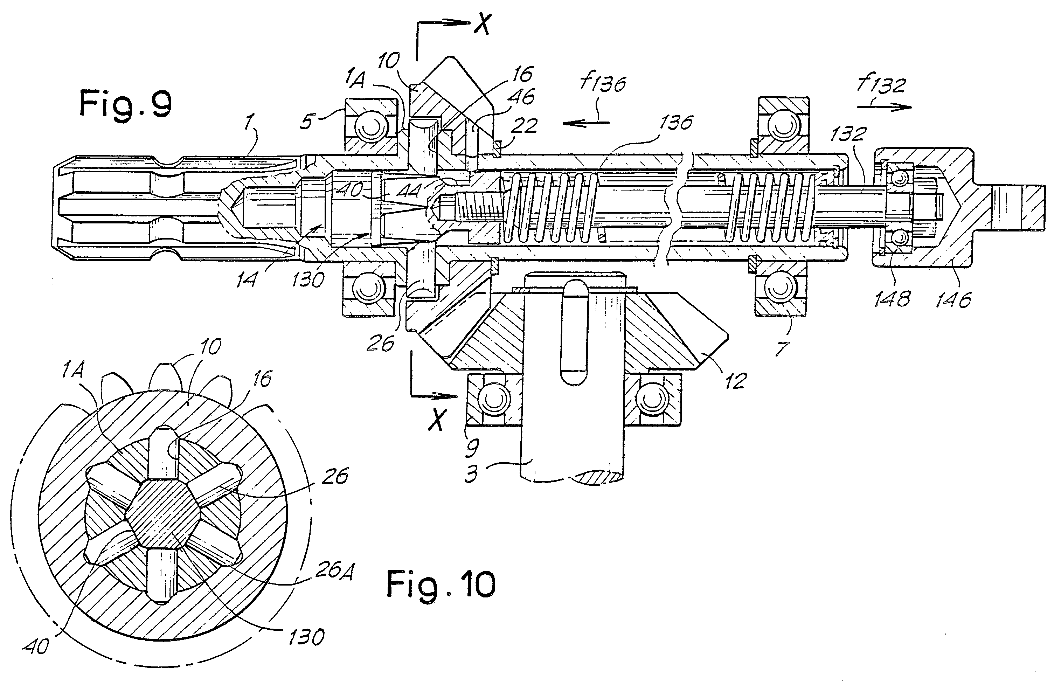

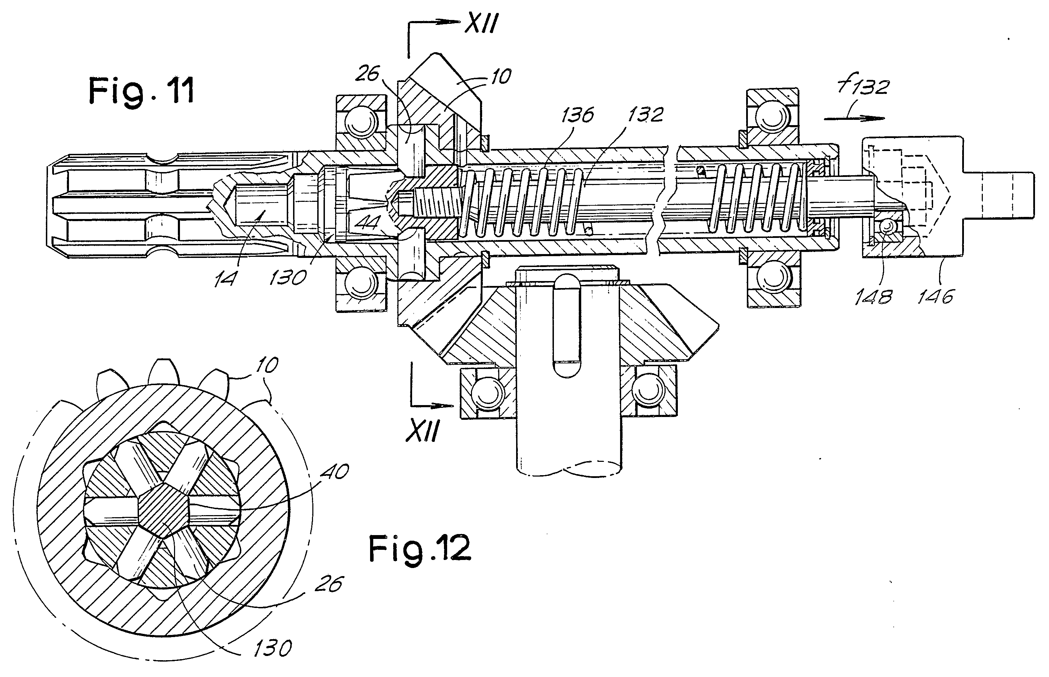

In the embodiment shown in Figs.9 to 12, the members corresponding to those already described are indicated by the same references. The disposition is reversed as far as the elastic action on core 130 is concerned, the latter being urged by a spring 136 in the direction of arrow f136, that is, in the direction opposite to that indicated by f36 along which the spring 36 of the preceding embodiment is made to operate. Rod 132 is no longer driven in the direction of arrow f32 but in the direction of arrow f132 that is through a tensile action, and for this purpose, a control member 146 is provided, which is combined with rod 132 through a rolling bearing 148 in such a way that, by maintaining the tensile action on member 146 according to arrow f132, the action of spring 136 is won and the engagement condition of the device with pawls 26 coupled to gear 10 is obtained. By stopping the tensile action on the control member 146, the action of spring 136 is allowed which causes the core 130 to be pushed so as to present the groove 44 in correspondence of the pawls which are centripetally pushed by the profiles of seats 24 for the disengagement. The engagement takes place by exerting a pull on member 148 sufficient to bring back the pawls, through the inclined surfaces 42 and 26C with a centrifugal motion, as far as to fit into seats 24 in order to give rise again to the motion transmission. Also in this case the limited inclination of surfaces 40, to an extent corresponding to the angle of friction, allows rod 132 and spring 136 to be operated without any particular dependence of the transmitted load and thus of the pawls pressure upon core 30.

Spring 136 is made to abut on same disc 34 as already provided in the previously disclosed arrangement, which disc in this case has both the function of providing a seal for the lubricant and a reaction support for spring 136.

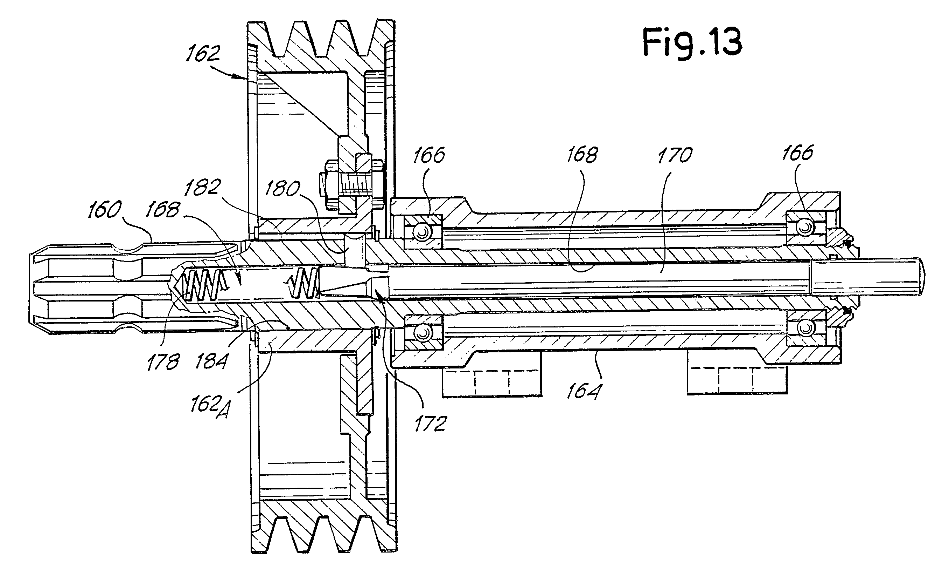

Fig. 13 shows a disengaging device which is disposed between a shaft 160 and a pulley drive member 162. The shaft is mounted on a support 164 by means of bearings 168. In said shaft an axial cavity 168 is formed, which is open at the right end in the drawing. A maneuvering rod 170 is housed in said cavity 168, said rod projecting from the shaft and being slidable with respect to the latter. Said rod (corresponding to rod 32 or 132) forms a core 172 (similar to core 30 or 130) having surfaces 174 and 176 similar to surfaces 40 and 42. A compression spring 178 (similar to spring 36) acts axially between the bottom of cavity 168 and the member forming the core 172. In the shaft 160, corresponding to core 172, radial through seats are formed for pawls 180 (similar to pawls 26), which cooperate with seats 182 (similar to seats 24) formed in the hole 184 in hub 162A of pulley 162 for housing the shaft.

The working is similar to the one described with reference to the preceding embodimens and is obtained by means of rod 170, possibly through a rotational joint similar to the one indicated by 148 in Figs. 9 to 12.

## Claims

1. An engagement and disengagement device between a shaft (1; 160) and at least a drive member (10; 162) on the shaft, characterized in that it comprises: a set of pawls (26; 180) radially movable within seats (16) formed in the shaft and on a possible element (1A) solid thereto to ensure the guiding of the pawls; in said drive member (10; 162) a housing (20, 184); with a peripheral surface with seats (24), shaped for cooperating with the outer ends of said pawls; inside the shaft an axial cavity (14; 168) for receiving a shaped core (30; 130; 172) axially movable for the operation, with elastic means (36; 136; 178) reacting to the axial movement of said core; and on said core, shapings and inclined surfaces (40, 42, 44; 174, 176) able to cooperate with the inner shaped ends of the pawls; and further characterized in that: the pawls (26, 180) have the outer ends (26A) shaped with inclination corresponding to seats (24) in the housing 20, 184) and the inner ends developed with two differently inclined surfaces (26B, 26C); that the central core (30; 130; 172) has surfaces (40, 174) inclined in correspondence of the pawl surfaces (26B) having less inclination - with respect to the shaft axis - as well as far more inclined surfaces (42, 176) in correspondence of the more inclined pawl surfaces (26B), along an annular groove (44) of said core on the side of the smallest cross-section of the zone of the surfaces (40) having less inclination; that spring means (36, 136, 178) are provided acting axially on core (30; 130; 178) and reacting on the shaft; and that an axial control rod (32; 132; 170) is provided to act on the core against the action of the spring means.

2. Engagement and disengagement device according to claim 1, characterized in that said minor inclination has nearly the value of the angle of friction occurring between the cooperating lubricated surfaces (26B; 40; 174) of the core and of each pawl.

3. Engagement and disengagement device according to claims 1 and 2 characterized in that: the spring means (36; 178) act on core (30; 172) to cause the centrifugal sliding of the pawls with interaction between surfaces (26C; 42 or 176) of greater inclination and thereby to determine the engagement and the retention of the engaged condition; and that the control rod (32; 170) is so developed as to make the core slide against the action of spring means and to cause the disengagement through a displacement of the pawl along the less inclined surfaces (40; 174) and thus in centripetal direction, inside said groove (44), owing to the reaction of the transmitted torque.

4. Engagement and disengagement device according to claims 1 and 2, characterized in that: the spring means (136) act on the core (130) to urge it into disengagement through a displacement until said annular groove (40) of the core is brought in correspondence of the pawls; and that said rod (132) is axially operated through rolling bearing means (148) for determining - against the action of spring means (136) - the engagement with radial centrifugal displacement of the pawls.

5. Engagement and disengagement device according to the preceding claims, characterized in that the housing forming the seats (182) for the pawls (180) in the drive member (162) is formed by the hole (184) in the hub (162A) of said drive member (162).

6. Engagement and disengagement device according to the preceding claims, comprising at least two shafts - an input and an output shaft - and at least a gear drive member (10) on one of said shafts, characterized in that the housing (20) with seats (24) for cooperating with pawls (26) is formed in the body of said gear and more particularly in the larger part of said body if said gear is a bevel one.

7. Engagement and disengagement device according to claim 6, characterized in that it comprises passages (46, 47, 48) between the gear teeth and as far as the axial cavity of the shaft, with a manifold provided in the cooperating surfaces of said member and said shaft.

Fig.1

Fig.2

Fig.3

Fig.4

Fig.5

Fig.6

EP 0 303 580 A1

Fig. 7

Fig. 8

EP 0 303 580 A1

Fig.9

X

10
1A
5
16
46
22
f136
136
f132
132
1
40
44
148
146
14
130
26
7
9
3
12
X

Fig.10

1A
10
16
26
26A
40
130

EP 0 303 580 A1

Fig. 11

26    10

XII

136    132

f 132

14    130    44    148    146

XII

Fig. 12

10

40

26

130

EP 0 303 580 A1

Fig.13

EP 0 303 580 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-1 354 521 (STROSK)<br>* Whole document *<br>--- | 1-6 | F 16 D 11/12 |
| Y | GB-A- 945 296 (HALL)<br>* Whole document *<br>--- | 1-6 | |
| Y | US-A-2 828 845 (THORNTON)<br>* Whole document * | 4 | |
| A | | 1,5 | |
| | --- | | |
| Y | FR-A-1 025 999 (DURAND)<br>* Whole document *<br>--- | 1-6 | |
| Y | DE-C- 388 513 (WITTLINGER)<br>* Whole document *<br>--- | 1-6 | |
| Y | DE-B-1 092 315 (ZAHNRADFABRIK FRIEDRICHSHAFEN AG)<br>* Whole document * | 4,6 | |
| A | | 5 | TECHNICAL FIELDS SEARCHED (Int. Cl.4) |
| | --- | | |
| A | GB-A-2 175 665 (FATA EUROPEAN)<br>--- | | F 16 D 11/00 |
| A | US-A-3 066 777 (HOFFMANN)<br>--- | | |
| A | FR-A- 668 318 (CHAZARD)<br>--- | | |
| A | NL-A-6 609 188 (AUTOMATIC SWITCH)<br>----- | | |

The present search report has been drawn up for all claims

| Place of search | Date of completion of the search | Examiner |
|---|---|---|
| THE HAGUE | 08-11-1988 | BALDWIN D.R. |